# EUROPEAN PATENT APPLICATION

(11) **EP 4 394 922 A1**
(43) Date of publication of application: **03.07.2024**
(21) Application number: 23159309.6
(22) Date of filing: 01.03.2023
(51) Int. Cl.: H01M 4/133, C01B 32/21, H01M 4/36, H01M 4/587, H01M 4/62

(54) **COMPOSITE GRAPHITE NEGATIVE ELECTRODE MATERIAL, NEGATIVE ELECTRODE SHEET, AND LITHIUM-ION BATTERY**

(30) Priority: 28.12.2022 CN 202211693353
(71) Applicant: CALB Group Co., Ltd., Changzhou City, Jiangsu Province (CN)
(72) Inventor: CHEN, Yanting, Changzhou City, Jiangsu Province (CN); LI, Xuerui, Changzhou City, Jiangsu Province (CN); WANG, Zhimin, Changzhou City, Jiangsu Province (CN); SHAN, Xuyi, Changzhou City, Jiangsu Province (CN); LI, Kui, Changzhou City, Jiangsu Province (CN)
(74) Representative: Becker, Eberhard

(57) **Abstract**

A composite graphite negative electrode material, a negative electrode sheet, and a lithium-ion battery are provided. The composite graphite negative electrode material includes a graphite particle and a coating layer coated on a surface of the graphite particle. A specific surface area change rate ΔA of a composite graphite satisfies 5%≤△A≤145% and a particle diameter D50 change rate △B of the composite graphite satisfies 0<△B≤7.5%. The composite graphite negative electrode material of the disclosure has better structural stability and can effectively improve the cycle life of the lithium-ion battery when used in the lithium-ion battery.

## Description

### BACKGROUND

### Technical Field

The disclosure relates to the technical field of batteries, and in particular to a composite graphite negative electrode material, a negative electrode sheet, and a lithium-ion battery.

### Description of Related Art

The lithium-ion battery is widely applied to fields such as 3C digital, electric tools, aerospace, energy storage, and power vehicles due to the advantages such as high specific energy, no memory effect, and long cycle life. The negative electrode material is an important composition of the lithium-ion battery and has an important impact on the cost and the performance of the battery.

The spherical natural graphite is a common negative electrode material, is obtained by spheroidizing and curling the flake graphite, and has the defect of weak interlayer acting force between graphite layers. During the charge/discharge cycle process of the lithium-ion battery, repeated deintercalation of lithium-ions on the positive and negative electrodes causes expansion stress to be continuously generated inside the battery. The gradual increase of the expansion stress may easily lead to the gradual separation and detachment of the graphite layers of the spherical natural graphite, so that the negative electrode material on the negative electrode sheet is gradually lost, thereby reducing the cycle life of the lithium-ion battery.

In order to solve the defect of the spherical natural graphite, the method commonly adopted at present is to design a coating layer on the surface of the spherical natural graphite. However, due to low strength and poor structural stability of the conventional coating layer, the coating layer cannot withstand the continuous increase of the expansion stress, and the negative electrode material eventually still detaches from the negative electrode sheet, resulting in a reduced cycle life.

Therefore, it is particularly important to provide a structurally stable negative electrode material.

### SUMMARY

An objective of the present disclosure is to provide a composite graphite negative electrode material, a negative electrode sheet, and a lithium-ion battery, so as to solve the issue of low cycle life of the lithium-ion battery.

According to an objective of the disclosure, a composite graphite negative electrode material is provided, including a graphite particle and a coating layer coated on a surface of the graphite particle. A specific surface area change rate ΔA of a composite graphite satisfies 5%≤ΔA≤145% and a particle diameter D50 change rate ΔB of the composite graphite satisfies 0<ΔB≤7.5%.

ΔA=|(A₂-A₁)/A₁|^{∗}100%, where A₁ is a specific surface area of the composite graphite and A₂ is the specific surface area of the composite graphite after 300 Mpa pressure treatment for 60s.

ΔB=|(B₂-B₁)/B₁|^{∗}100%, where B₁ is a particle diameter D50 of the composite graphite and B₂ is the particle diameter D50 of the composite graphite after 300 Mpa pressure treatment for 60s.

The composite graphite negative electrode material of the disclosure has a core-shell structure, which includes an inner core graphite particle and a coating layer coated on a surface of the graphite particle. There are pores inside the graphite particle. After 300 MPa pressure treatment, the inner core graphite particle and/or the coating layer of the composite graphite is damaged, resulting in a larger specific surface area and a smaller particle diameter D50. The degree of damage (of the specific surface area and the particle diameter D50 change rate) depends on the structural stability of the composite graphite. When the particle diameter D50 becomes significantly smaller, it means that the coating layer of the composite graphite significantly cracks and detaches during the extrusion process, and even the pores of the graphite particle shrink, indicating that the structural stability of the composite graphite is very poor. When the specific surface area becomes slightly larger, it means that there are a large number of pores in the graphite particle, and the specific surface area of an inner core is significantly reduced after extrusion. Even though the coating layer increases the specific surface area of a surface layer after extrusion, the specific surface area is only slightly larger when comprehensively considering the specific surface areas of the inner core and the surface layer. When the specific surface area becomes significantly larger, it indicates that the strength of the coating layer is insufficient, the structural stability is poor, and significant cracking and detachment occur after extrusion, resulting in a significantly larger specific surface area. Therefore, the specific surface area change rate ΔA of the composite graphite of the disclosure satisfies 5%≤ΔA≤145% and the particle diameter D50 change rate ΔB of the composite graphite satisfies 0<ΔB≤7.5%. The specific surface area change rate and the diameter D50 change rate can ensure that the inner core graphite particle and the coating layer of the composite graphite both have relatively stable structures, so that the structure of the composite graphite is stable. During the cycle process of the battery, the expansion stress generated inside the battery is not easy to damage the structure of the composite graphite, and the composite graphite is not easy to detach from the negative electrode sheet, thereby ensuring the cycle life of the lithium-ion battery.

According to a second objective of the disclosure, a negative electrode sheet is provided, including the composite graphite negative electrode material.

According to a third objective of the disclosure, a lithium-ion battery is provided, including the negative electrode sheet.

### DETAILED DESCRIPTION OF DISCLOSED EMBODIMENTS

In order for persons skilled in the art to better understand the solutions of the disclosure, the technical solutions in the embodiments of the disclosure will be clearly and completely described below. Obviously, the described embodiments are only a part, but not all, of the embodiments of the disclosure.

In the disclosure, CMC is carboxymethyl cellulose, SBR is styrene-butadiene rubber, PVDF is polyvinylidene difluoride, NMP is N-methylpyrrolidone, EC is ethylene carbonate, EMC is ethyl methyl carbonate, DEC is diethyl carbonate, IPN is an interpenetrating polymer network, and PNS is a sodium naphthalene sulfonate polymer.

The coking value of pitch adopted in the disclosure is represented by residual carbon rate. According to the method specified in GB/T8727-2008, 1g of pitch dry sample with a particle size of 1 to 3 mm is weighed, placed in a 20 ml crucible with constant weight, covered with a lid, and put into a 100 ml crucible covered with 10 mm of thick coke particles. A gap between the two crucibles is filled with coke particles until the coke particles cover the entire inner crucible, and the lid of the outer crucible is covered. Then, the treated crucible is put on a nickel-chromium wire rack and placed in a muffle furnace at 550°C±10°C. The bottom of the outer crucible is about 25 mm from the bottom of the furnace, and the muffle furnace returns to a constant temperature of 550°C±10°C within 10 min. The crucible is taken out after heating for 2h and naturally cooled for 15 min. Then, the inner crucible is taken out with coke powder on the surface swept off, put into a desiccator, and cooled to room temperature. The mass of residual coke is weighed. The mass percentage of the residual coke relative to the pitch dry sample is the coking value of the pitch.

### Example 1

### 1) Preparation of composite graphite

a. Densification treatment: spherical natural graphite with a specific surface area of 8.9 m²/g and a particle diameter D50 of 9.8 µm was taken and mechanically extruded for 2h with a cold isostatic press at an extrusion pressure of 150 MPa. Bulk graphite was obtained. Then, the bulk graphite was depolymerized and broken up. Densified spherical graphite was obtained.
b. Coating: 1 kg of asphalt with a softening point of 180°C, a coking value of 55%, and a particle diameter D50 of 3 µm and 10 kg of the densified spherical graphite of Step a were taken, put into a mechanical fusion machine protected by nitrogen, fused for 2h with a stirring frequency of 50 Hz, and discharged. A graphite coating material was obtained.
c. Heat treatment: the graphite coating material of Step b was put into a box-type carbonization furnace protected by nitrogen. The temperature was raised to 1250°C at a rate of 10°C/min, kept warm for 4h, then naturally cooled to room temperature, taken out, broken up, and sieved. Composite graphite with a core-shell structure, a specific surface area of 2.2 m²/g, and a particle diameter D50 of 10.6 µm was obtained.

### 2) Preparation of negative electrode sheet

The composite graphite of Step 1), conductive agent acetylene black, thickener CMC, and binder SBR were mixed according to a mass ratio of 96.4:1:1.2:1.4. Then, solvent deionized water was added to the resulting mixture and stirred under the action of a vacuum mixer until the solution was homogeneous. A negative electrode slurry was obtained. The negative electrode slurry was evenly coated on two opposite surfaces of a copper foil of a negative electrode current collector, dried at room temperature, transferred to an oven for drying, then cold pressed, and slit. A negative electrode sheet was obtained.

### 3) Preparation of positive electrode sheet

A positive electrode active material LiNi_{0.6}Mn_{0.2}Co_{0.2}O₂, conductive agent acetylene black, and binder PVDF were mixed according to a mass ratio of 96:2:2. Then, solvent NMP was added to the resulting mixture and stirred under the action of a vacuum mixer until the solution was homogeneous. A positive electrode slurry was obtained. The positive electrode slurry was evenly coated on two opposite surfaces of an aluminum foil of a positive electrode current collector, dried at room temperature, transferred to an oven for drying, then cold pressed, and slit. A positive electrode sheet was obtained.

### 4) Preparation of electrolyte

EC, EMC, and DEC were mixed according to a volume ratio of 1:1:1. An organic solvent was obtained. Then, dried lithium salt LiPF₆ was fully added to the organic solvent and stirred until the lithium salt LiPF₆ was completely dissolved. An electrolyte with a lithium salt LiPF₆ concentration of 1 mol/L was obtained.

### 5) Assembly of battery

The positive electrode sheet of Step 3), a polyethylene separator, and the negative electrode sheet of Step 2) were sequentially stacked, so that the polyethylene separator was placed between the positive electrode sheet and the negative electrode sheet for isolation. Then, the stack was wound. A bare cell was obtained. The bare cell was placed in an outer casing, dried, injected with electrolyte, and subjected to processes such as vacuum packaging, standing still, forming, and shaping. A lithium-ion battery of the example was obtained.

### Example 2

In the example, a lithium-ion battery was also prepared. The difference between the preparation process of the lithium-ion battery and that of Example 1 was that the preparation process of the composite graphite was different.

The preparation process of the composite graphite of the example was as follows:
a. Densification treatment: spherical natural graphite with a specific surface area of 8.9 m²/g and a particle diameter D50 of 9.8 µm was taken and mechanically extruded for 2h with a cold isostatic press at an extrusion pressure of 150 MPa. Bulk graphite was obtained. Then, the bulk graphite was depolymerized and broken up. Densified spherical graphite was obtained.
b. Coating: 1 kg of asphalt with a softening point of 220°C, a coking value of 60%, and a particle diameter D50 of 3 µm, and 10 kg of the densified spherical graphite of Step a were taken, put into a mechanical fusion machine protected by nitrogen, fused for 2h with a stirring frequency of 50 Hz, and discharged. A graphite coating material was obtained.
c. Heat treatment: the graphite coating material of Step b was put into a high-temperature carbonization furnace protected by nitrogen. The temperature was first raised to 1250°C at a rate of 10°C/min, the temperature was then raised to 2200°C at a rate of 5°C/min, kept warm for 4h, then naturally cooled to room temperature, taken out, broken up, and sieved. Composite graphite with a core-shell structure, a specific surface area of 1.9 m²/g, and a particle diameter D50 of 10.2 µm was obtained.

### Example 3

In the example, a lithium-ion battery was also prepared. The difference between the preparation process of the lithium-ion battery and that of Example 1 was that the preparation process of the composite graphite was different.

The preparation process of the composite graphite of the example was as follows:
a. Dense coating treatment: 1 kg of asphalt with a softening point of 220°C, a coking value of 65%, and a particle diameter D50 of 1µm and 10 kg of spherical natural graphite with a specific surface area of 8.9 m²/g and a particle diameter D50 of 9.8µm were taken, put into a mechanical fusion machine protected by nitrogen, fused for 12h with a stirring frequency of 50 Hz, and discharged. An impregnated and densified graphite coating material was obtained.
b. Heat treatment: the graphite coating material of Step a was put into an Acheson graphitization furnace protected by nitrogen. The temperature was first raised to 1250°C at a rate of 10°C/min, the temperature was then raised to 3000°C at a rate of 5°C/min, kept warm for 4h, then naturally cooled to room temperature, taken out, broken up, and sieved. Composite graphite with a core-shell structure, a specific surface area of 2.8 m²/g, and a particle diameter D50 of 10.3µm was obtained.

### Example 4

In the example, a lithium-ion battery was also prepared. The difference between the preparation process of the lithium-ion battery and that of Example 1 was that the preparation process of the composite graphite was different.

The preparation process of the composite graphite of the example was as follows:
a. Dense coating treatment: 10 kg of spherical natural graphite with a specific surface area of 8.9 m²/g and a particle diameter D50 of 9.8 µm, 0.5 kg of asphalt with a softening point of 150°C, a coking value of 60%, and a particle diameter D50 of 1 µm, and 0.5 kg of asphalt with a softening point of 180°C, a coking value of 65%, and a particle diameter D50 of 1 µm were taken, put into a mechanical fusion machine, fused for 24h with a stirring frequency of 25 Hz under conditions of a temperature of 160 °C and a vacuum degree of -1 MPa, then cooled through cooling water, and discharged. An impregnated and densified graphite coating material was obtained.
b. Heat treatment: the graphite coating material of Step a was put into a high-temperature carbonization furnace protected by nitrogen. The temperature was first raised to 1250°C at a rate of 10°C/min, the temperature was then raised to 2200°C at a rate of 5°C/min, kept warm for 4h, then naturally cooled to room temperature, taken out, broken up, and sieved. Composite graphite with a core-shell structure, a specific surface area of 1.8 m²/g, and a particle diameter D50 of 10.5 µm was obtained.

### Example 5

In the example, a lithium-ion battery was also prepared. The difference between the preparation process of the lithium-ion battery and that of Example 1 was that the preparation process of the composite graphite was different.

The preparation process of the composite graphite of the example was as follows:
a. Densification treatment: 10 kg of spherical natural graphite with a specific surface area of 8.9 m²/g and a particle diameter D50 of 9.8 µm and 0.5 kg of asphalt with a softening point of 180°C, a coking value of 65%, and a particle diameter D50 of 1 µm were put into a hot isostatic press and extruded at 190°C for 2h at an extrusion pressure of 150 MPa. Densely packed bulk graphite was obtained. Then, the bulk graphite was depolymerized and broken up. Densified spherical graphite was obtained.
b. Coating: 0.5 kg of asphalt with a softening point of 250°C, a coking value of 65%, and a particle diameter D50 of 3 µm and 10.5 kg of the densified spherical graphite of Step a were taken, put into a mechanical fusion machine protected by nitrogen, fused for 2h with a stirring frequency 50 Hz, and discharged. A graphite coating material was obtained.
c. Heat treatment: the graphite coating material of Step b was put into a high-temperature carbonization furnace protected by nitrogen. The temperature was first raised to 1250°C at a rate of 10°C/min, the temperature was then raised to 2200°C at a rate of 5°C/min, kept warm for 4h, then naturally cooled to room temperature, taken out, broken up, and sieved. Composite graphite with a core-shell structure, a specific surface area of 1.6 m²/g, and a particle diameter D50 of 10.4 µm was obtained.

### Example 6

In the example, a lithium-ion battery was also prepared. The difference between the preparation process of the lithium-ion battery and that of Example 1 was that the preparation process of the composite graphite was different.

The preparation process of the composite graphite of the example was as follows:
a. Densification treatment: 10 kg of spherical natural graphite with a specific surface area of 8.9 m²/g and a particle diameter D50 of 9.8 µm and 0.5 kg of asphalt with a softening point of 180°C, a coking value of 65%, and a particle diameter D50 of 1 µm were taken, put into a hot isostatic press, extruded at 190°C for 4h at an extrusion pressure of 180 MPa. Densely packed bulk graphite was obtained. Then, the bulk graphite was depolymerized and broken up. Densified spherical graphite was obtained.
b. Heat treatment: the densified spherical graphite of Step a was put into a high-temperature carbonization furnace protected by nitrogen. The temperature was first raised to 1250°C at a rate of 10°C/min, the temperature was then raised to 2200°C at a rate of 5°C/min, kept warm for 4h, then naturally cooled to room temperature, taken out, broken up, and sieved. A densely packed graphite material was obtained.
c. Coating: 0.5 kg of asphalt with a softening point of 180°C, a coking value of 55%, and a particle diameter D50 of 3 µm and 10.5 kg of the graphite material of Step b were taken, put into a mechanical fusion machine protected by nitrogen, fused for 2h with a stirring frequency of 50 Hz, and discharged. A graphite coating material was obtained.
d. Second heat treatment: the graphite coating material of Step c was put into a box-type carbonization furnace protected by nitrogen. The temperature was raised to 1250°C at a rate of 10°C/min, kept warm for 4h, then naturally cooled to room temperature, taken out, broken up, and sieved. Composite graphite with a core-shell structure, a specific surface area of 1.9 m²/g, and a particle diameter D50 of 10.4 µm was obtained.

### Example 7

In the example, a lithium-ion battery was also prepared. The difference between the preparation process of the lithium-ion battery and that of Example 5 was that the filling medium and the coating layer were both made of phenolic resin.

The preparation process of the composite graphite of the example was as follows:
a. Densification treatment: 10 kg of spherical natural graphite with a specific surface area of 8.9 m²/g and a particle diameter D50 of 9.8 µm and 0.5 kg of phenolic resin with a particle diameter D50 of 1 µm were taken, put into a hot isostatic press, and extruded at 190°C for 2h at an extrusion pressure of 150 MPa. Densely packed bulk graphite was obtained. Then, the bulk graphite was depolymerized and broken up. Densified spherical graphite was obtained.
b. Coating: 0.5 kg of phenolic resin with a particle diameter D50 of 1 µm and 10.5 kg of the densified spherical graphite of Step a were taken, put into a mechanical fusion machine protected by nitrogen, fused for 2h with a stirring frequency of 50 Hz, and discharged. A graphite coating material was obtained.
c. Heat treatment: the graphite coating material of Step b was put into a high-temperature carbonization furnace protected by nitrogen. The temperature was first raised to 1300°C at a rate of 10°C/min, the temperature was then raised to 2250°C at a rate of 5°C/min, kept warm for 4h, then naturally cooled to room temperature, taken out, broken up, and sieved. Composite graphite with a core-shell structure, a specific surface area of 1.8 m²/g, and a particle diameter D50 of 10.3 µm was obtained.

### Example 8

In the example, a lithium-ion battery was also prepared. The difference between the preparation process of the lithium-ion battery and that of Example 1 was that the filling medium and the coating layer were both made of polyvinyl alcohol.

The preparation process of the composite graphite of the example was as follows:
a. Densification treatment: 10 kg of spherical natural graphite with a specific surface area of 8.9 m²/g and a particle diameter D50 of 9.8 µm and 0.5 kg of polyvinyl alcohol with a particle diameter D50 of 1 µm were taken, put into a hot isostatic press, and extruded at 190°C for 2h at an extrusion pressure of 150 MPa. Densely packed bulk graphite was obtained. Then, the bulk graphite was depolymerized and broken up. Densified spherical graphite was obtained.
b. Coating: 0.5 kg of polyvinyl alcohol with a particle diameter D50 of 1 µm and 10.5 kg of the densified spherical graphite of Step a were taken, put into a mechanical fusion machine protected by nitrogen, fused for 2h with a stirring frequency of 50 Hz, and discharged. A graphite coating material was obtained.
c. Heat treatment: the graphite coating material of Step b was put into a high-temperature carbonization furnace protected by nitrogen. The temperature was first raised to 1200°C at a rate of 10°C/min, the temperature was then raised to 2100°C at a rate of 5°C/min, kept warm for 4h, then naturally cooled to room temperature, taken out, broken up, and sieved. Composite graphite with a core-shell structure, a specific surface area of 1.9 m²/g, and a particle diameter D50 of 11.5 µm was obtained.

### Comparative Example 1

In the comparative example, a lithium-ion battery was also prepared. The difference between the preparation process of the lithium-ion battery and that of Example 1 was that the densification treatment and the coating treatment were not performed on the spherical natural graphite.

The preparation process of the graphite of the comparative example was as follows:
Heat treatment: spherical natural graphite with a specific surface area of 8.9 m²/g and a particle diameter D50 of 9.8 µm was taken and put into an Acheson graphitization furnace. The temperature was first raised to 1250°C at a rate of 10°C/min, the temperature was then raised to 3000°C at a rate of 5°C/min, kept warm for 4h, then naturally cooled to room temperature, taken out, broken up, and sieved. Graphite with a core-shell structure, a specific surface area of 3.5 m²/g, and a particle diameter D50 of 10 µm was obtained.

### Comparative Example 2

In the comparative example, a lithium-ion battery was also prepared. The difference between the preparation process of the lithium-ion battery and that of Example 1 was that the preparation process of the composite graphite was different.

The preparation process of the composite graphite of the comparative example was as follows:
a. Densification treatment: spherical natural graphite with a specific surface area of 8.9 m²/g and a particle diameter D50 of 9.8 µm was taken and mechanically extruded for 2h with a cold isostatic press at an extrusion pressure of 150 MPa. Bulk graphite was obtained. Then, the bulk graphite was depolymerized and broken up. Densified spherical graphite was obtained.
b. Coating: 1 kg of asphalt with a softening point of 150°C, a coking value of 50%, and a particle diameter D50 of 3 µm and 10 kg of the densified spherical graphite of Step a were taken, put into a mechanical fusion machine protected by nitrogen, fused for 2h with a stirring frequency of 50 Hz, and discharged. A graphite coating material was obtained.
c. Heat treatment: the graphite coating material of Step b was put into a box-type carbonization furnace protected by nitrogen. The temperature was raised to 1100°C at a rate of 10°C/min, kept warm for 4h, then naturally cooled to room temperature, taken out, broken up, and sieved. Composite graphite with a core-shell structure, a specific surface area of 2.4 m²/g, and a particle diameter D50 of 10.2 µm was obtained.

### Comparative Example 3

In the example, a lithium-ion battery was also prepared. The difference between the preparation process of the lithium-ion battery and that of Example 2 was that the coating treatment was not performed on the densified spherical graphite.

The preparation process of the composite graphite of the example was as follows:
a. Densification treatment: spherical natural graphite with a specific surface area of 8.9 m²/g and a particle diameter D50 of 9.8 µm was taken and mechanically extruded for 2h with a cold isostatic press at an extrusion pressure of 150 MPa. Bulk graphite was obtained. Then, the bulk graphite was depolymerized and broken up. Densified spherical graphite was obtained.
b. Heat treatment: the densified spherical graphite of Step a was put into a high-temperature carbonization furnace protected by nitrogen. The temperature was first raised to 1250°C at a rate of 10°C/min, the temperature was then raised to 2200°C at a rate of 5°C/min, kept warm for 4h, then naturally cooled to room temperature, taken out, broken up, and sieved. Composite graphite with a core-shell structure, a specific surface area of 2.2 m²/g, and a particle diameter D50 of 11.2 µm was obtained.

Table 1 shows conditions of the preparation processes of the graphite or the composite graphite of Examples 1 to 6 and Comparative Examples 1 and 2.

**Table 1:**

| Preparation object | Densification treatment | Filling/asphalt coating | | | Heat treatment temperature/°C |
|---|---|---|---|---|---|
| | | Softening point/°C | Coking value% | D50/µm | |
| Example 1 | Mechanical densification | 180 | 55 | 3 | 1250 |
| Example 2 | Mechanical densification | 220 | 60 | 3 | 2200 |
| Example 3 | Impregnation densification | 220 | 65 | 1 | 3000 |
| Example 4 | Impregnation densification | 150 | 60 | 1 | 2200 |
| | | 180 | 65 | 1 | |
| Example 5 | Packed densification | 180 | 65 | 1 | 2200 |
| | | 250 | 65 | 3 | |
| Example 6 | Packed densification | 180 | 65 | 1 | 2200 |
| | | 180 | 55 | 3 | 1250 |
| Example 7 | Packed densification | Phenolic resin D50 is 1 µm | | | 2250 |
| Example 8 | Packed densification | Polyvinyl alcohol D50 is 1 µm | | | 2100 |
| Comparative Example 1 | - | - | - | - | 3000 |
| Comparative Example 2 | Mechanical densification | 150 | 50 | 3 | 1100 |
| Comparative Example 3 | Mechanical densification | - | - | - | 2200 |

### Performance Testing and Analysis

1. Test object: the composite graphite prepared in Examples 1 to 6 and Comparative Examples 1 and 2, and the lithium-ion battery using the composite graphite as the negative electrode active material.
2. Test item

### 1) Test of specific surface area and particle diameter D50

① At 25°C, with reference to the specific surface area and particle size test method of the international standard GB/T24533-2019, the specific surface area (A₁) and the particle diameter D50 (B₁) of the composite graphite prepared in Examples 1 to 6 and Comparative Examples 1 and 2 were tested.
② The composite graphite prepared in the same batch was taken and processed under a pressure of 300 MPa for 60s. Then, at 25°C, with reference to the powder compaction test method and the specific surface area and particle size test method of the international standard GB/T24533-2019, the specific surface area (A₂) and the particle diameter D50 (B₂) were tested.

The specific surface area change rate △A=|(A₂-A₁)/A₁|^{∗}100% and the particle diameter D50 change rate △B=|(B₂-B₁)/B₁|^{∗}100%.

### 2) Cycle performance test

At 25°C, the lithium-ion battery prepared in Examples 1 to 6 and Comparative Examples 1 and 2 was subjected to a full charge/discharge cycle test at a rate of 1C until the capacity of the lithium-ion battery decayed to 80% of the initial capacity. The number of cycles was recorded.

### 3) Direct current impedance test

At 25°C, the state of charge of the lithium-ion battery prepared in Examples 1 to 6 and Comparative Examples 1 and 2 was adjusted to 50% SOC and discharged at a current rate of 1C for 18s. A battery voltage U₂, a current I, and a stabilized battery voltage U₁ before the discharge was terminated were recorded. A direct current internal resistance R was calculated and obtained according to the formula R=(U₂-U₁)/I. The direct current internal resistances of the lithium-ion battery before and after the cycle performance test were tested according to the test method and were respectively recorded as R₀ and R₁. The direct current resistance growth rate = (R₁-R₀)/R₀.

3. Test result: Table 2 shows the specific surface area and the change rate and D50 and the change rate of the composite graphite prepared in Examples 1 to 6 and Comparative Examples 1 and 2, and the cycle performance and the direct current impedance change rate of the lithium-ion battery using the composite graphite as the negative electrode active material.

**Table 2:**

| Test object | A₁/m²·g⁻¹ | A₂/m²·g⁻¹ | B₁/µm | B₂/µm | ΔA /% | ΔB /% | Cycle performance/ cycle | Direct current resistance growth rate/% |
|---|---|---|---|---|---|---|---|---|
| Example 1 | 2.2 | 5.39 | 10.6 | 9.81 | 14 5 | 7.5 | 1592 | 45 |
| Example 2 | 1.9 | 3.59 | 10.2 | 9.69 | 89 | 5.0 | 2356 | 31 |
| Example 3 | 2.8 | 2.94 | 10.3 | 10.23 | 5 | 0.7 | 1785 | 37 |
| Example 4 | 1.8 | 2.02 | 10.5 | 10.35 | 12 | 1.4 | 1975 | 39 |
| Example 5 | 1.6 | 2.5 | 10.4 | 10.22 | 56 | 1.7 | 2542 | 24 |
| Example 6 | 1.9 | 4.18 | 10.4 | 10.04 | 12 0 | 3.5 | 1796 | 41 |
| Example 7 | 1.8 | 2.32 | 10.3 | 9.6 | 28. 9 | 6.8 | 1663 | 40 |
| Example 8 | 1.9 | 2.45 | 11.5 | 8.9 | 28. 9 | 22. 6 | 1693 | 36 |
| Comparative Example 1 | 3.5 | 3.65 | 10.0 | 8.53 | 4.3 | 14. 7 | 1456 | 65 |
| Comparative Example 2 | 2.4 | 6.43 | 10.2 | 9.37 | 16 8 | 8.1 | 1396 | 59 |
| Comparative Example 3 | 2.2 | 5.2 | 11.2 | 10.3 | 13 6 | 8 | 1550 | 55 |

Referring to Table 2, comparing test data of Examples 1 to 6 and Comparative Examples 1 and 2, it can be seen that after the composite graphite is treated at a pressure of 300 MPa for 60s, compared with the untreated composite graphite, when the specific surface area change rate and the particle diameter D50 change rate satisfy 5%≤△A≤145% and 0<△B≤7.5%, the lithium-ion battery using the composite graphite as the negative electrode active material has better cycle performance and lower direct current resistance growth rate, so the service life of the lithium-ion battery is extended to a certain extent. The detailed analysis is as follows.

In terms of material structure, the composite graphite is a core-shell structure, which includes an inner core graphite particle and a coating layer coated on the surface of the graphite particle. There are pores inside the graphite particle. After 300 MPa pressure treatment, the inner core graphite particle and/or the coating layer of the composite graphite is damaged, resulting in a larger specific surface area and a smaller particle diameter D50. The degree of damage (of the specific surface area and the particle diameter D50 change rate) depends on the structural stability of the composite graphite. When the particle diameter D50 becomes significantly smaller, it means that the coating layer of the composite graphite significantly cracks and detaches during the extrusion process, and even the pores of the graphite particle shrink, indicating that the structural stability of the composite graphite is very poor. When the specific surface area becomes slightly larger, it means that there are a large number of pores in the graphite particle, and the specific surface area of an inner core is significantly reduced after extrusion. Even though the coating layer increases the specific surface area of a surface layer after extrusion, the specific surface area is only slightly larger when comprehensively considering the specific surface areas of the inner core and the surface layer. When the specific surface area becomes significantly larger, it indicates that the strength of the coating layer is insufficient, the structural stability is poor, and significant cracking and detachment occur after extrusion, resulting in a significantly larger specific surface area.

Therefore, according to the above analysis, the composite graphite prepared in Examples 1 to 6 has a relatively stable structure. In the cycle performance test of the lithium-ion battery prepared using the composite graphite of Examples 1 to 6 as the negative electrode active material, the structure of the composite graphite is not easily damaged, is not easily cracked, does not detach, etc. Therefore, the lithium-ion battery of Examples 1 to 6 has better cycle performance and lower direct current resistance growth rate.

Also, comparing the test results of Examples 1 to 6, it can be seen that the preferred specific surface area change rate and the particle diameter D50 change rate are 0<ΔB≤5% and 5%≤ΔA≤120%, and the more preferred specific surface area change rate and particle diameter D50 change rate are 0<ΔB ≦ 5% and 5% ≦ △A ≦ 89%. It indicates that a combination of at least two of densification treatment, filling and/or asphalt coating, and heat treatment at a higher temperature of 1250 to 3000°C is beneficial to improving the structural stability of the composite graphite.

In addition, it can be seen from Table 2 that Example 2 and Example 5 are the most preferred examples, that is, coating the spherical natural graphite after performing mechanical densification or filling densification and the process condition of heat treatment at 2200°C are beneficial to significantly improving the structural stability of the composite graphite. Also, in terms of process simplicity, Example 2 is better than Example 5.

Comparing the test results of Example 5 and Examples 7 and 8, it can be seen that the structural stability of the composite graphite prepared by selecting asphalt as the coating and filling material is better than that of phenolic resin and polyvinyl alcohol, so that the lithium-ion battery prepared by using the composite graphite of Example 5 as the negative electrode active material has better cycle performance and lower direct current resistance growth rate as compared with that of Examples 7 and 8.

Comparative Example 1 directly adopts the spherical natural graphite for heat treatment at 3000°C without performing operations such as densification, coating, and filling. The heat treatment has no obvious effect on the specific surface area and the particle diameter D50 of the spherical natural graphite. There are still a large number of pores and graphite layers with poor acting force in the spherical natural graphite. After 300 MPa pressure treatment, the pores shrink and become tight, while the graphite layers crack to a certain extent and detach (the combination of the two causes the specific surface area and the particle diameter D50 change rate to be both smaller), and the structural stability is poor. Therefore, in the cycle performance test, it is easy for the negative electrode to continuously generate new interfaces due to the cracking of the spherical natural graphite, resulting in the continuous thickening of a SEI film on the surface of the negative electrode sheet, thereby causing a rapid decline in cycle performance and a significant increase in direct current internal resistance. Moreover, since no operations such as densification, coating, and filling are performed on the comparative example, it shows that the extrusion process of mechanical densification can effectively reduce the pores of the spherical natural graphite, enabling the structure to be tighter, and filling densification and impregnation densification enable effective bonding between the graphite layers, thereby increasing the acting force between the graphite layers, that is, the densification process is conducive to improving the structural stability of the composite graphite.

Although the mechanical densification treatment adopted in Comparative Example 2 can improve the structural stability of the inner core graphite particle, an amorphous carbon layer obtained by performing heat treatment at a relatively low temperature of 1 100°C on the asphalt coating layer with low coking value and low softening point has poor crystallinity and weak coating strength. Therefore, the structural stability of the composite graphite is poor. After 300 MPa pressure treatment, the internal pores may shrink to a certain extent and become tight, but the amorphous carbon layer on the surface is severely cracked, broken, and detaches due to insufficient strength. Therefore, the specific surface area and the particle diameter D50 change rate are both larger. The expansion stress generated in the cycle test may easily cause the coating layer to crack and detach, resulting in the graphite particle being exposed and side reactions such as solvent co-intercalation with the electrolyte, and the electrolyte may also easily enter the inside of the graphite particle to cause side reactions, thereby causing a rapid decline in cycle performance and a significant increase in direct current internal resistance.

For Comparative Example 3, only the mechanical densification treatment and the heat treatment are performed without performing the coating treatment. The composite graphite has many pores, has low strength, may easily crack and detach, and has poor structural stability. Therefore, the cycle performance is poor and the direct current internal resistance is significantly increase.

## Claims

1. A composite graphite negative electrode material, comprising a graphite particle and a coating layer coated on a surface of the graphite particle, wherein:
a specific surface area change rate ΔA of the composite graphite satisfies 5%≤ΔA≤145% and a particle diameter D50 change rate ΔB of the composite graphite satisfies 0<ΔB≤7.5%;
wherein ΔA=|(A₂-A₁)/A₁|^{∗}100%, where A₁ is a specific surface area of the composite graphite and A₂ is a specific surface area of the composite graphite after 300 Mpa pressure treatment for 60s;
ΔB=|(B₂-B₁)/B₁|^{∗}100%, where B₁ is a particle diameter D50 of the composite graphite and B₂ is a particle diameter D50 of the composite graphite after 300 Mpa pressure treatment for 60s.

2. The composite graphite negative electrode material according to claim 1, wherein: the particle diameter D50 change rate ΔB of the composite graphite satisfies 0<ΔB≤5%.

3. The composite graphite negative electrode material according to claim 2, wherein: the specific surface area change rate ΔA of the composite graphite satisfies 5%≤ΔA≤120%.

4. The composite graphite negative electrode material according to claim 3, wherein: the specific surface area change rate ΔA of the composite graphite satisfies 5%≤ΔA≤89%.

5. The composite graphite negative electrode material according to claim 1, wherein: the graphite particle comprises a spherical natural graphite, pores disposed in the spherical natural graphite, and a filling medium disposed in the pores, and the filling medium is a carbon medium.

6. The composite graphite negative electrode material according to claim 5, wherein: the filling medium and the coating layer are at least one of asphalt and polymer;
the polymer comprises at least one of resin polymer, styrene-butadiene rubber, carboxymethyl cellulose, interpenetrating polymer network, poly naphthalene sulfonate, and polyvinyl alcohol;
the resin polymer comprises at least one of phenolic resin, epoxy resin, furan resin, and furfural resin.

7. The composite graphite negative electrode material according to claim 6, wherein: a mass ratio of a mass of the coating layer to the spherical natural graphite is 6-20:100; or
a mass ratio of a total mass of the coating layer and the filling medium to the spherical natural graphite is 6-20:100.

8. The composite graphite negative electrode material according to claim 7, wherein: the coating layer is asphalt, a particle diameter D50 of the asphalt is 1 to 4 µm, a softening point is 180 to 250°C, and a coking value is 55 to 65%;
the filling medium is asphalt, a particle diameter D50 of the asphalt is 1 to 4 µm, a softening point is 150 to 200°C, and a coking value is 60 to 70%.

9. A negative electrode sheet, comprising the composite graphite negative electrode material according to claim 1.

10. A lithium-ion battery, comprising the negative electrode sheet according to claim 9.
